# EUROPEAN PATENT SPECIFICATION

(11) **EP 4 140 739 B1**
(45) Date of publication and mention of the grant of the patent: **09.07.2025**
(21) Application number: 22190723.1
(22) Date of filing: 17.08.2022
(51) Int. Cl.: B32B 41/00, B32B 37/20

(54) **A METHOD FOR LAMINATION**
VERFAHREN ZUR LAMINIERUNG
PROCÉDÉ DE STRATIFICATION

(30) Priority: 24.08.2021 EP 21192869
(43) Date of publication of application: 01.03.2023
(73) Proprietor: Tetra Laval Holdings & Finance S.A., 1009 Pully (CH)
(72) Inventor: GYLLING, Jonas, 244 66 Furulund (SE); WIKNER, Jens, 21871 Tygelsjö (SE)
(74) Representative: Tetra Pak - Patent Attorneys SE

(56) References cited:
- KR-B1- 102 162 538
- US-A1- 2015 314 580
- US-B2- 10 836 147
- US-B2- 10 994 525

## Description

### Technical Field

The invention relates to a method for lamination of a barrier film to a bulk layer of a laminated packaging material for packaging of liquid food products, said bulk layer being provided with going-through holes.

### Background Art

Packaging containers of the single use disposable type for liquid foods are often produced from a packaging laminate based on paperboard or carton. One such commonly occurring packaging container is marketed under the trademark Tetra Brik Aseptic^{®} and is principally employed for aseptic packaging of liquid foods such as milk, fruit juices etc, sold for long term ambient storage. The packaging material in this known packaging container is typically a laminate comprising a bulk or core layer, of paper, paperboard or other cellulose-based material, and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium foil acting as a barrier.

On the inside of the laminate, i.e. the side intended to face the filled food contents of a container produced from the laminate, there is an innermost layer, applied onto the aluminium foil, which innermost, inside layer may be composed of one or several part layers, comprising heat sealable thermoplastic polymers, such as adhesive polymers and/or polyolefins. Also on the outside of the bulk layer, there is an outermost heat sealable polymer layer.

The packaging containers are generally produced by means of modern, highspeed packaging machines of the type that form, fill and seal packages from a web or from prefabricated blanks of packaging material. Packaging containers may thus be produced by reforming a web of the laminated packaging material into a tube by both of the longitudinal edges of the web being united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepipedic, by fold formation along prepared crease lines in the packaging material.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are reduced from bacteria and the filled packaging container is produced under clean conditions such that the filled package may be stored for a long time even at ambient temperature, without the risk of growth of micro-organisms in the filled product. Another important advantage of the Tetra Brik^{®} -type packaging method is, as stated above, the possibility of continuous highspeed packaging, which has considerable impact on cost efficiency.

Packaging containers for sensitive liquid food, for example milk or juice, can also be produced from sheet-like blanks or prefabricated blanks of the laminated packaging material of the invention. From a tubular blank of the packaging laminate that is folded flat, packages are produced by first of all building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.

Single-use packaging containers may be provided with an opening structure, e.g. for allowing insertion of a straw into the packaging container. In order to reduce the required penetration force for a consumer the laminated packaging material may be processed in various ways. One common approach is to punch a hole in the bulk or core layer prior to lamination, and then cover the hole on the inside and outside by the additional lamination layers, including the barrier material. By such configuration the consumer does not have to penetrate the bulk or core layer, which significantly reduces the required penetration force. Still, the intact barrier will provide the desired integrity of the packaging container until the straw is inserted.

Lamination of the barrier to the bulk or core layer is typically performed by extrusion lamination, where an extruded and melted polymer is brought into contact with the bulk or core layer and the barrier layer, immediately upstream a nip formed between a nip roller and a chill roller. In this nip the bulk or core layer as well as the barrier layer are thus almost simultaneously brought into contact with the molten extrusion polymer and pressed hard together to enable lamination of the bulk and barrier layers; the laminated structure is then typically allowed to run along a part of the chill roller to cool down while the melt extrusion polymer solidifies completely. For proper adhesion and laminate strength, a minimum thickness of the melt extrusion polymer is needed to bind the two layers, i.e. the bulk or core layer and the barrier layer, together. The minimum thickness is typically at least 15 g/m², such as at least 18 g/m², such as at least 20 g/m², depending on the stiffness and thickness of the bulk layer.

For improving packaging material sustainability, the reduction of the thickness of the laminated packaging material, and specifically the reduction of the thickness of the extrusion lamination layer or bonding layer, could reduce the CO₂ foot print as well as increase fiber content of the laminated packaging material. For this reason it has been suggested to replace extrusion lamination by wet lamination.

Applied in the above-described context, wet lamination is performed by providing a wet adhesive coating to the barrier before entering the nip and meeting with the bulk or core layer. The nip roller applies pressure against a motor driven backup roller, or vice versa, thus forcing the adhesion between the barrier and the bulk or core layer.

However, wet lamination of bulk or core layers with going-through holes is associated with a number of drawbacks. For example, the adhesive utilized for adhering the barrier to the bulk or core layer may leak out via the holes and stick to the nip roller. This may cause pollution of the lamination equipment, including the formation of residues in the packaging material at any stages downstream the nip. This could in turn create performance issues or integrity issues in the packaging container..

There is thus a need for an improved method and apparatus for wet lamination of substrates with going-through holes, reducing the risk for wet adhesive sticking to the lamination rollers.

### Summary

It is an object of the invention to at least partly overcome one or more of the above-identified limitations of the prior art. In particular, it is an object to prevent pollution of the lamination equipment in wet lamination of substrates with going-through holes.

US granted patent No. US10994525B2 describes a method for laminating a carton-based packaging material for liquid packaging, comprising steps for laminating two material webs to each other, one of which is a paper or paperboard web, by means of wet lamination of a low amount of an aqueous adhesive composition, such that the adhesive composition is substantially absorbed into the paper web(s) and no forced drying or curing of the adhesive composition is required.

US granted patent No. US10836147B2 describes a method for laminating a carton-based packaging material for liquid packaging, comprising steps for laminating a thin print substrate of paper to the outer side of a paperboard of the type containerboard, such as linerboard, i.e. which does not have a printable pigment coating, and which has a relatively rough surface and a brownish, non-white colour. The two webs of paper are laminated to each other by means of a wet lamination method as described above.

Korean granted patent No. KR102162538B1 describes a method of laminating PET films to each other by means of curing adhesive lamination.

US patent application No. US20150314580A1 describes a method laminating a support to a non-metallic substrate by means of a curing adhesive. No paper or paperboard are involved in the lamination.

To solve these objects a method for lamination of a barrier film or sheet to a bulk layer of paper or paperboard or other cellulose-based material being provided with going-through holes is provided. The method comprises coating the barrier film or sheet with a wet adhesive and feeding the coated barrier to a nip. The nip is formed between a nip roller and a support roller such that the non-coated side of the barrier film or sheet is in contact with the nip roller. The nip roller comprises a surface material being softer than the surface material of the support roller. The term "surface material" should in this context be interpreted as the material of the respective roller being in contact, during use, with the barrier film or sheet or the bulk layer.

The method further comprises feeding the bulk layer to said nip such that the bulk layer is in contact with the support roller and feeding the bulk layer and the coated barrier film or sheet through the nip, thereby allowing the bulk layer to adhere to the barrier film or sheet by means of the adhesive.

The feeding of the barrier film or sheet such that the non-coated side is in contact with the nip roller and the feeding of the bulk layer such that the bulk layer is in contact with the support roller reduces the risk for the wet adhesive coming into contact with the rollers due to it being contained between the barrier film or sheet and the bulk layer.

The bulk layer may be provided as a continuous web. The barrier film or sheet may be provided as a continuous web.

The barrier film or sheet may be an aluminum foil, a plastic film being provided with a barrier coating or paper or cellulose-based sheet being provided with a barrier coating.

The bulk layer and the barrier film or sheet may have a combined thickness of between 0,2 and 0,45 millimeters.

The method may comprise adjusting the distance between the support roller and the nip roller based on the combined thickness of the bulk layer and the barrier film or sheet. This allows for adaptation of the nip in accordance with the material at hand, which may mitigate the risk for the rollers filling up the going-through holes to an undesirable degree due to the distance not being adapted to the thickness of the material. Thus, the risk for pollution of the lamination equipment is further decreased.

The distance may be adjusted such that said distance is smaller than the combined thickness of the bulk layer and the barrier film or sheet.

The distance may be adjusted based on input provided by user by means of a user interface. Thus, a user friendly and reliable manner of achieving the desired distance is provided.

To further solve the aforementioned objects a wet lamination station for lamination of a barrier film or sheet to a bulk layer of paper or paperboard or other cellulose-based material being provided with going-through holes. The wet lamination station comprises a coating unit configured to coat the barrier film or sheet with a wet adhesive and a lamination unit comprising a nip roller and a support roller. The wet lamination station further comprises a barrier film or sheet feeding unit configured to continuously provide the barrier film or sheet through the lamination unit such that the non-coated side is in contact with the nip roller, a bulk layer feeding unit configured to continuously provide the bulk layer through the lamination unit such that the bulk layer is in contact with the support roller and actuation means either configured to press the nip roller in the direction of the support roller, or configured to press the support roller in the direction of the nip roller.

The positioning of the support roller and nip roller reduces the risk for the wet adhesive coming into contact with the rollers due to it being contained between the barrier film or sheet and the bulk layer.

The outer circumferential surface of the nip roller may be made of an elastomeric material. The elastomeric material allows for a more even pressure distribution in the nip.

The elastomeric material may have a Shore hardness of at least 90 ShA and preferably at least 92 ShA. The relatively hard elastomeric material has a lesser tendency to fill up the going-through holes in the base layer compared to a softer elastomeric material since the pressure required to be applied by the actuation means does not have to be as high.

The wet lamination station may comprise a drive unit configured to drive the rotation of the support roller.

The actuation means may be hydraulically operated. A hydraulically operated actuation means is more robust against being pushed out of engagement with the material when a splice in the material to be laminated is passing. Thus, it allows for a wet lamination process which is more robust against air entrapment between the base layer and barrier film or sheet during splices.

The wet lamination station may comprise adjusting means for adjusting the distance between the support roller and the nip roller. This allows for adaptation of the nip in accordance with the material at hand, which may mitigate the risk for the rollers filling up the going-through holes to an undesirable degree due to the distance not being adapted to the thickness of the material. Thus, the risk for pollution of the lamination equipment by the wet adhesive is further decreased.

One of the support roller and nip roller may be adjustably arranged in a support structure. The adjusting means may comprise at least one linear actuator. Each linear actuator may be connected to a movable adjusting member arranged to engage the support roller or nip roller for adjusting the position of said support roller or nip roller relative the support structure. Thus, a user friendly and reliable manner of achieving the desired distance between the support roller and nip roller is provided.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1a is an isometric view of a packaging container formed from a packaging material laminate.
Fig. 1b is a schematic view of a wet lamination station, itself however not within the scope of the claimed invention, and method for lamination according to an embodiment of the present invention.
Fig. 2 is an isometric view of a lamination unit of a wet lamination station, itself however not within the scope of the claimed invention.
Fig. 3 is a side view of the lamination unit.
Fig. 4 is an isometric and partial cross-section view of the lamination unit.

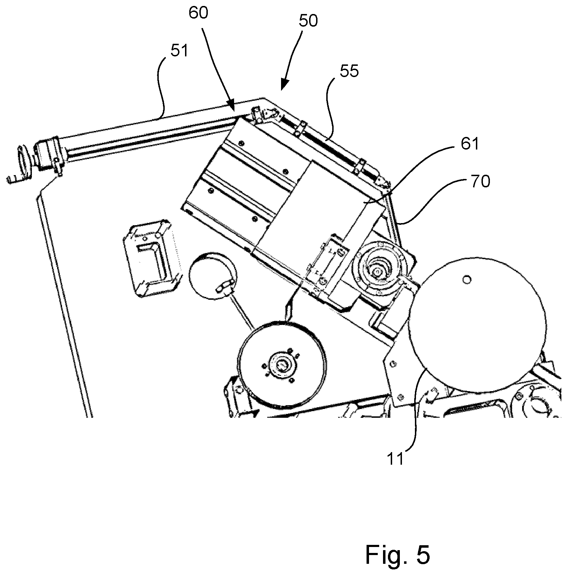

Fig. 5 is a detailed view of a part of the lamination unit.
Fig. 6 is a schematic view of a part of a mechanism for adjusting the distance between the rollers of the lamination unit.

### Detailed description

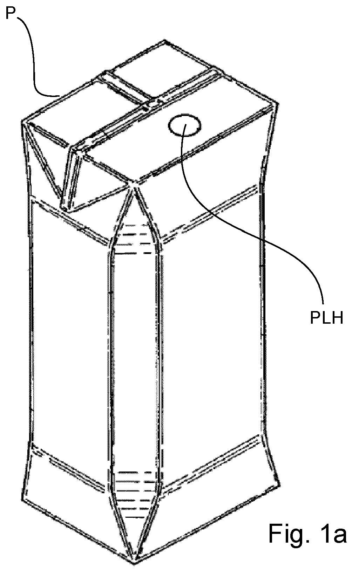

Starting in Fig. 1a a packaging container P is shown. The packaging container P is produced from a packaging material as described within this specification; in particular the packaging material comprises a bulk layer being coated by a barrier film or sheet. The packaging container is provided with a pre-cut, laminated hole PLH, forming e.g. a straw hole.

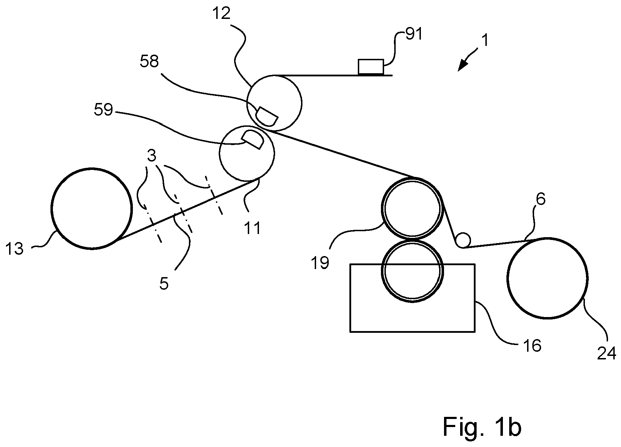

With reference to Fig. 1b a wet lamination station is illustrated. The wet lamination station 1 is intended for coating a bulk layer 5 with a barrier film or sheet 6; the laminated bulk layer 5 and barrier film or sheet 6 will subsequently be used to form a packaging material.

The bulk layer 5 is provided with going-through holes 3, i.e. holes extending right through the material sheet of the bulk layer. Each going-through hole 3 may be intended to form a part of an opening structure of a packaging container together with a portion of the barrier film or sheet 6 extending across said going-through hole 3, e.g. in the form of a straw hole as shown in Fig. 1a. The going-through holes 3 may be punched holes, e.g. pre-punched holes, forming e.g. straw holes of the final packaging container.

The barrier film or sheet 6 may be an aluminium foil, a plastic film being provided with a barrier coating, or a paper or cellulose-based sheet being provided with a barrier coating.

The barrier coating may comprise a polymer selected from the group consisting of vinyl alcohol polymers and copolymers, such as from the group consisting of polyvinyl alcohol (PVOH) and ethylene vinyl alcohol (EVOH), starch, starch derivatives, nanofibrillar cellulose/ microfibrillar cellulose (NFC/ MFC), [nanocrystalline cellulose (NCC)] and of blends of two or more thereof. Such polymers are dispersible or dissolvable as substantially aqueous compositions. The barrier dispersion coating from such dispersions or solutions may be applied by means of dispersion or solution coating at an amount of from 0.2 to 5 g/m2, such as from 0.5 to 4 g/m2, such as from 0.5 to 3.5 g/m2, such as from 1 to 3 g/m2, dry weight.

The barrier coating may alternatively or additionally comprise material selected from i.a. metals, metal oxides, inorganic oxides and amorphous diamond-like carbon coatings. The vapour deposition coating is applied by means of physical vapour deposition (PVD) or chemical vapour deposition (CVD), for example by plasma enhanced chemical vapour deposition (PECVD). It may more specifically be selected from the group consisting of an aluminium metallisation coating and aluminium oxide, AlOx. Preferably it is an aluminium metallisation coating.

The wet lamination station comprises a lamination unit (not depicted in Figure 1). The wet lamination station comprises a nip roller 12 and a support roller 11. The nip roller 12 and the support roller 11 forms a nip. The nip is configured to receive the bulk layer 5 and the barrier film or sheet 6. The support roller 11 may be a cooling roller or a chill roller. The cooling roller or the chill roller may be cooled by means of an inner water cooling device (not shown).

The bulk layer 5 and the barrier film or sheet 6 may have a combined thickness of between 0,2 and 0,45 millimeters. The bulk layer 5 may constitute at least 80 and preferably at least 90% of the combined thickness of the bulk layer 5 and the barrier film or sheet 6.

The wet lamination station 1 comprises a coating unit 16. The coating unit 16 is configured to coat the barrier film or sheet 6 with a wet adhesive 19. A wet adhesive may herein also be referred to as a glue.

The coating unit 16 is configured to apply a wet adhesive. The wet adhesive may be in the form of a dispersion or solution based on an aqueous acrylic-polymer adhesion-promoting composition on the barrier film or sheet 6. Compared to extrusion lamination which requires amount of polymer of between 15 and 20 g/m2 of barrier film or sheet in order to get sufficient heat from the molten polymer for adhesion, wet lamination only requires amounts of wet adhesive of between 2 and 5 g/m2 of barrier film or sheet for adequate adhesion. The coating unit 16 may thus be configured to apply a coating of wet adhesive of between 2 and 5 g/m2 on the barrier film or sheet.

To feed the barrier film or sheet 6 to the lamination unit, the wet lamination station 1 comprises a barrier film or sheet feeding unit 24. The barrier film or sheet feeding unit 24 is configured to continuously provide the barrier film or sheet 6 through the lamination unit 10. The barrier film or sheet 6 may be provided as a continuous web. The barrier film or sheet feeding unit 24 may be a reel configured to unwind a roll of web of barrier film or sheet 6 to feed the web of barrier film or sheet 6 through the lamination unit.

To feed the bulk layer 5 to the lamination unit, the wet lamination station 1 comprises a bulk layer feeding unit 13. The bulk layer feeding unit 13 is configured to continuously provide the bulk layer 5 through the lamination unit 10. The bulk layer 5 may be provided as a continuous web. The bulk layer feeding unit 13 may be a reel configured to unwind a roll of web of bulk layer to feed the web of bulk layer through the lamination unit.

As seen in Figure 1b, barrier film or sheet 6 is fed by the barrier film or sheet feeding unit 24 through the nip formed between the nip roller 12 and the support roller 11. The barrier film or sheet 6 is fed to the nip via the coating unit 16 at which the barrier film or sheet 6 is coated with the wet adhesive 19 on one side. The barrier film or sheet feeding unit feeds the barrier film or 6 such that the non-coated side of the barrier film or sheet 6 is in contact with the nip roller 12. The coated side of said barrier film or sheet 6 may thus be facing the support roller 11 in the nip.

The bulk layer 5 is fed by the bulk layer feeding unit 13 to the nip. The bulk layer feeding unit 13 feeds the bulk layer to the nip such that the bulk layer is in contact with the support roller 11.

The bulk layer 5 and the barrier film or sheet 6 is fed through the nip thereby allowing the bulk layer 5 to adhere to the barrier film or sheet 6 by means of the adhesive. The bulk layer 5 and the barrier film or sheet 6 may be fed through the nip by means of the bulk layer feeding unit 13 and the barrier film or sheet feeding unit 24, respectively.

The pressure provided by the nip laminates the barrier film or sheet 6 onto the bulk layer 5 thereby achieving a laminated material. The laminated material may then be led downstream the nip to a drier 91 of the wet lamination station for drying of the wet adhesive 19.

In general lamination systems , the material being in contact with the nip roller 12 and the support roller 11 is such that the nip roller is in contact with the thicker or more stable layer and the support roller is in contact with the thinner, sensitive layer, such as a film or foil. The general lamination set-up could however risk a wet adhesive to contact the nip roller as a bulk layer with through-going holes and a thin barrier film or sheet are compressed together in the nip. Due to the nip roller commonly being of a softer material than the support roller, the nip roller could partially fill the going-through holes during the compression thereby contacting a wet adhesive, which could cause pollution by the wet adhesive in the lamination station.

With the above described method according to the invention and wet lamination station, itself however not according to the invention, the risk for this type of pollution is eliminated or reduced.

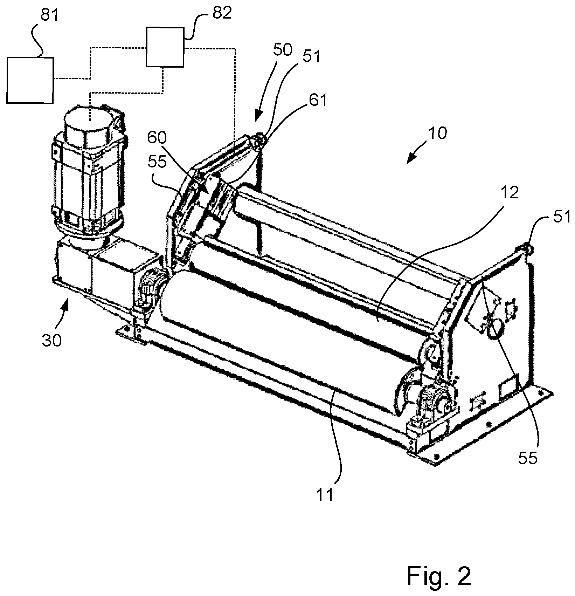

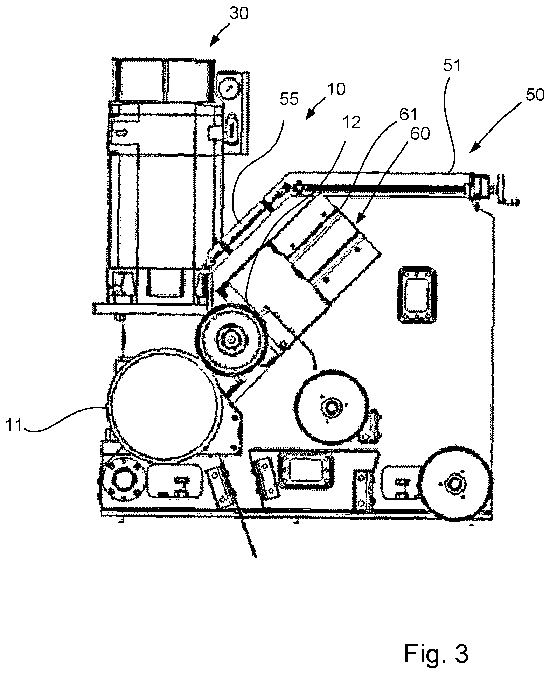

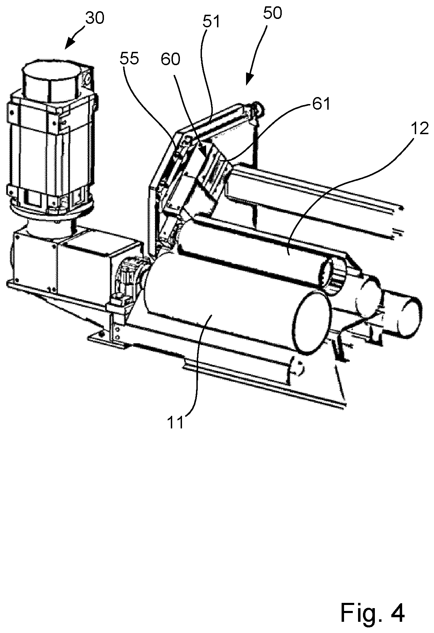

With reference to Figs. 2-4, a lamination unit of the wet lamination station is illustrated.

The lamination unit 10 forms a part of the wet lamination station. The lamination unit 10 comprises the support roller 11 and the nip roller 12.

The support roller 11 may be a driven support roller 11. Accordingly, the wet lamination station may comprise a drive unit 30. The drive unit 30 is configured to drive the rotation of the support roller 11. As depicted in Fig. 2-4, drive unit 30 may be comprised in the lamination unit 10.

In order to generate the pressure requisite for lamination, the bulk layer 5 and the barrier film or sheet are pressed together between the nip roller 12 and the support roller. The region which is put under pressure between the rollers is generally entitled the nip. The extent of the nip in the longitudinal direction is determined on the one hand by the force between the support roller and the nip roller and on the other hand by how the resilient the material in the nip roller and the support roller is.

To maintain the sufficient pressure in the nip, the wet lamination station may comprise actuation means 60 configured to press the nip roller 12 in the direction of the support roller 11. As depicted in Fig. 2-4 the actuation means 60 may be comprised in the lamination unit 10. The actuation means 60 may be adapted to press the nip roller 12 in the direction of the support roller 11 and against the barrier film or sheet 6. During feeding of the bulk layer and the coated barrier film or sheet through the nip, the actuation means provides a pressuring force from the nip roller 12 onto the coated barrier film or sheet and the bulk layer.

The actuation means 60 may be hydraulically or pneumatically operated. Advantageously, the actuation means is hydraulically operated.

The actuation means 60 may comprise an actuator 61 for pressing the nip roller 12 in the direction of the support roller. The actuator 61 is configured to exert a pressure on the barrier film or sheet, the bulk layer and the support roller 11 via the nip roller 12. The actuator 61 may be configured to exert a biasing force on the nip roller for keeping the nip roller at a set distance relative the support roller. The actuator may be hydraulically operated and may thus be a hydraulic actuator.

The actuator 61 may be connected to the nip roller 12. The actuation means may comprise a first and second actuator, connected to a first and second transversal end of the nip roller 12, respectively.

Alternatively or additionally, the nip roller 12 may be of a shoe roller type. Such a nip roller may comprise a press web and a pressure bar connected to the actuator. The pressure bar is actuatable by means of the actuator. In operation, the pressure web runs at the same speed as the support roller, the web of base layer and the barrier film or sheet. The pressure is generated by the press web being urged by the pressure bar against the support roller. The pressure bar is positioned stationary in relation to the support roller. The press web is arranged to slide against a front surface of the bar.

The outer circumferential surface of the nip roller 12 may be in an elastomeric material. The elastomeric material may be rubber. Preferably, the elastomeric material has a Shore hardness of at least 90 ShA and more preferably at least 92 ShA. Conventional nip rollers commonly utilizes a relatively soft rubber material. The soft material fills up the going-through holes to a larger extent compared to a harder material. Furthermore, a softer material requires the actuation means to provide a higher pressure to ensure the compression of the material in the nip which further increases the hole-filling effect. The harder rubber material allows for sufficient pressure distribution as well as a comparably lower tendency of filling the going-through holes.

As the skilled person recognizes, shore hardness is measured by a shore durometer, a device for measuring the hardness of a material, typically of polymers, elastomers and rubbers. The shore hardness is measured by the durometer measuring the depth of an indentation in a material created by a predefined force/pressure. ShA herein refers to the Shore A Hardness Scale which is commonly utilized to measure the hardness of elastomeric materials which are relatively soft and flexible.

The nip roller 12 may have a metal core enveloped by an elastomeric coating forming the outer circumferential surface of the nip roller 12. The metal core may be in Aluminum or steel.

The support roller is provided with an outer circumferential surface being made of a rigid material, such that the surface area of the nip roller is softer than the surface area of the support roller. Preferably the surface material of the support roller is a metal, such as steel optionally covered by chromium.

The distance or gap between the nip roller 12 and the support roller 11 may be adjustable to accommodate different thicknesses of the barrier film or sheet and bulk layer. The wet lamination station may comprise adjusting means for adjusting this distance. Advantageously, the adjusting means may be comprised in the lamination unit. The adjusting means allows for adjusting of the distance between the support roller 11 and the nip roller 12 based on the combined thickness of the bulk layer 5 and the barrier film or sheet 6, i.e. the adjusting means allows for adjustment of the nip or nip distance. To ensure proper compression the distance is preferably adjusted such that the distance between the support roller 11 and nip roller 12 is smaller than the combined thickness of the bulk layer and the barrier film or sheet.

Accordingly, the distance between the nip roller 12 and the support roller 11 is preferably smaller than the combined thickness of the bulk layer 5 and the barrier film or sheet 6. Preferably, the distance between the nip roller 12 and the support roller is 60-70% of the combined thickness of the bulk layer 5 and the barrier film or sheet 6. For example, if the combined thickness of the bulk layer 5 and the barrier film or sheet 6 is 0,45 millimeters, the distance may preferably be 0,3 millimeters.

Referencing Fig. 2, the wet lamination station may further comprise a controller 82. The controller 82 may be operatively connected to the drive unit 30. The controller 82 may be configured to control the operation of the drive unit 82.

The controller 82 may be operatively connected to the adjusting means 50. The controller 82 may be configured to control the operation of the adjusting means 50 for adjusting the distance between the nip roller 12 and the support roller 11. Thus, the controller 82 may be configured to control the adjusting means 50 to adjust the distance between the support roller 11 and the nip roller 12 based on user input received by the user interface 81.

The wet lamination station may further comprise a user interface 81 to allow a user to interface with the controller 82, and in turn the lamination station. The user interface 81 may be a graphical user interface (GUI). The user interface 81 is operatively connected to the controller 82. The user interface 81 may be configured to allow a user to vary the distance between the nip roller 12 and the support roller 11.

A user may accordingly provide data to the controller 82 via the user interface 81. The data may comprise data concerning the combined thickness of the bulk layer and the barrier film or sheet. In response to receiving said data, the controller 82 is configured to adjust the distance between the nip roller 12 and the support roller 11. Preferably, the distance is adjusted such that the distance is smaller than the combined thickness.

Advantageously, the user input, i.e. the user input provided via the user interface 81, may comprise any one or both of the Shore hardness of the outer circumferential surface of the nip roller and the combined thickness of the barrier film or sheet and the bulk layer. The combined thickness of the barrier film or sheet and the bulk layer may be provided as a single value or separate values for each of the bulk layer and the barrier film or sheet. The Shore hardness of the outer circumferential surface may be provided as a Shore hardness value or an identification value associated with a nip roller type with a predefined Shore hardness value.

A user may thus before the lamination takes place provide instructions to the controller 82 via the user interface 81 by providing user input comprising any one or both the Shore hardness of the outer circumferential surface of the nip roller and the combined thickness of the barrier film or sheet and the bulk layer. In response to the user data, the controller 82 prompts the actuation means 50 to set the distance between nip roller 12 and the support roller 11 whereby the distance between said nip roller 12 and support roller 11 is adjusted.

Alternatively or additionally, the aforementioned thickness may be provided by means of the controller 82 obtaining external data or sensor data from optical sensors configured to measure the thickness of the bulk layer and barrier film or sheet.

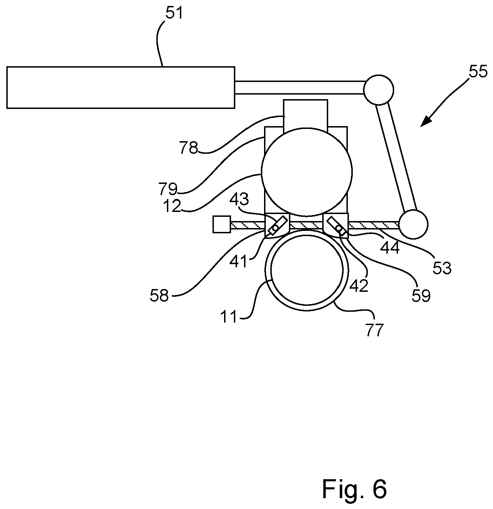

Fig. 6 schematically depicts the adjusting means 50. One of the support roller 11 and the nip roller 12 is adjustably arranged in a support structure 70. The support structure 70 may comprise a rail 78. A support bearing 77 of the support roller 11 or a support bearing 79 of the nip roller 12 may be arranged in the rail 78 for allowing movement and adjustment of said nip roller or support roller. In the depicted example, the nip roller 12 is movable relative the support roller 11 for adjusting the distance between the nip roller and support roller. Thus, the support bearing 79 of the nip roller 12 is arranged in the rail 78.

Advantageously, the nip roller is further arranged to be urged against the movable adjusting member 58, 59 by the actuation means (not depicted in Fig. 6). The movable adjusting member 58, 59 may thus be arranged to constitute a stop for the actuation of the nip roller 12 against the support roller 11.

Preferably, the nip roller 12 and support roller 11 may comprise support bearings at each of their transversal ends. The support structure may comprise a first and second rail 78 adjustably receiving a first and second support bearing of the nip roller or support roller.

The adjusting means 50 may comprise at least one actuator 51. The actuator 51 may be a linear actuator such as a linear servo motor. The linear actuator 51 may be connected to a movable adjusting member 58, 59. The adjusting member is arranged to engage the support roller 11 or nip roller 12 for adjusting the position of the support roller 11 or nip roller 12 relative the support structure 70.

The linear actuator 51 is connected to the movable adjusting member 58, 59 by means of an arm mechanism 55. The arm mechanism 55 is connected to at least one movable adjusting member 58, 59. The movable adjusting member 58, 59 is arranged on a threaded shaft 53. The threaded shaft 53 is connected to the arm mechanism 55, whereby the arm mechanism 55 is arranged to rotate the threaded shaft in response to actuation by the linear actuator 51, thereby moving the movable adjusting member 58, 59 in turn prompting the adjustment of the distance between the nip roller 12 and the support roller 11. The arm mechanism 55 may thus be arranged to convert the linear movement of the linear actuator 51 to the rotational movement of the threaded shaft 53.

As depicted in Fig. 6, the movable adjusting member 58, 59 may be arranged between the support bearing 79 of the nip roller and the support bearing 77 of the support roller 12. Upon rotation of the threaded shaft 53, the movable adjusting member is moved, thus engaging the support bearing 79 of the nip roller 12 forcing movement of the nip roller 12 relative the rail 78.

A pair of movable adjusting members 58, 59 may be arranged on the threaded shaft 53 such that rotation of the threaded shaft causes movement of the adjusting members towards each other or away from each other along the threaded shaft 53.

The movable adjusting members 58, 59 may be arranged in a guiding arrangement arranged to urge the movable adjusting members 58, 59 in a direction extending away from or towards the adjustable roller (in the depicted example the nip roller) in response to rotation of the threaded shaft 53 thereby causing movement of the adjustable roller. The guiding arrangement may comprise a guided pin 41, 42 guided in a track 43, 44. The track may extend in a diagonal direction relative the threaded shaft 53 in a plane orthogonal to the axial direction of the nip roller and support roller. In the depicted example, each of the adjusting members of the pair of movable adjusting members 58, 59 is provided with a track 43, 44 in engagement with a stationary guiding pin 41, 42. Upon movement of the adjusting members along the threaded shaft, the diagonally directed tracks will also force the adjusting members in a direction extending towards or away from the nip roller 12 due to the engagement between the tracks 41, 42 and guiding pins 43, 44.

Referencing Figure 6, rotation of the threaded shaft in a first direction causes the movable adjusting members 58, 59 to move towards each other and in a direction towards the nip roller 12 thereby urging the nip roller away from support roller 11 due to the movable adjusting members being in engagement with the nip roller 12. Rotation of the threaded shaft in a second, opposite, direction causes the movable adjusting members 58, 59 to move away from each other and in a direction away from the nip roller 12 thereby urging the nip roller towards the support roller due to the movable adjusting members being in engagement with the nip roller 12.

Preferably, the adjusting means comprises two linear actuators 51. A first linear actuator may be connected to a first arm mechanism in turn connected to movable adjusting members arranged at a first transversal side of the nip roller or support roller for adjusting said nip roller or support roller. Correspondingly, a second linear actuator may be connected to a second arm mechanism in turn connected to movable adjusting members arranged at a second transversal side of the nip roller or support roller for adjusting said nip roller or support roller.

As the skilled person recognizes, the adjusting means 50 may be constituted by any conventional means for moving the rollers relative each other.

From the description above follows that, although various embodiments of the invention have been described and shown, the invention is not restricted thereto, but may also be embodied in other ways within the scope of the subject-matter defined in the following claims.

## Claims

1. A method for lamination of a barrier film or sheet (6) to a bulk layer (5) of paper or paperboard or other cellulose-based material, said bulk layer (5) being provided with going-through holes (3), the method comprising:
coating the barrier film or sheet (6) with a wet adhesive (19),
feeding the coated barrier film or sheet to a nip formed between a nip roller (12) and a support roller (11) such that the non-coated side of the barrier film or sheet (6) is in contact with the nip roller (12), feeding the bulk layer (5) to said nip such that the bulk layer (5) is in contact with the support roller (11), and
feeding the bulk layer (5) and the coated barrier film or sheet through the nip, thereby allowing the bulk layer (5) to adhere to the barrier film or sheet (6) by means of the adhesive (19), **characterized in that**
the surface material of the nip roller (12) is softer than the surface material of the support roller (11).

2. The method according to claim 1, wherein the bulk layer (5) is provided as a continuous web.

3. The method according to claim 1 or 2, wherein the barrier film or sheet (6) is provided as a continuous web.

4. The method according to any of the preceding claims, wherein the barrier film or sheet (6) is an aluminium foil, a plastic film being provided with a barrier coating, or a paper or cellulose-based sheet being provided with a barrier coating.

5. The method according to any one of the preceding claims, wherein the bulk layer (5) and the barrier film or sheet (6) has a combined thickness of between 0,2 and 0,45 millimeters.

6. The method according to claim any one of the preceding claims, further comprising adjusting the distance between the support roller (11) and the nip roller (12) based on the combined thickness of the bulk layer (5) and the barrier film or sheet (6).

7. The method according to claim 6, further comprising adjusting the distance between the support roller (11) and nip roller (12) such that said distance is smaller than the combined thickness of the bulk layer (5) and the barrier film or sheet (6).

8. The method according to claim 6 or 7, further comprising adjusting the distance based on input provided by a user by means of a user interface (81).

## Patentansprüche

1. Verfahren zum Laminieren einer Barrierefolie oder - schicht (6) auf eine Volumenschicht (5) aus Papier oder Pappe oder einem anderen Material auf Cellulosebasis, wobei die Volumenschicht (5) mit Durchgangslöchern (3) versehen ist, wobei das Verfahren umfasst:
Beschichten der Barrierefolie oder -schicht (6) mit einem feuchten Klebstoff (19),
Zuführen der beschichteten Barrierefolie oder -schicht zu einem Spalt, der zwischen einer Andruckwalze (12) und einer Stützwalze (11) gebildet ist, so dass sich die nichtbeschichtete Seite der Barrierefolie oder -schicht (6) in Kontakt mit der Andruckwalze (12) befindet,
Zuführen der Volumenschicht (5) zu dem Spalt, so dass sich die Volumenschicht (5) in Kontakt mit der Stützwalze (11) befindet, und
Führen der Volumenschicht (5) und der beschichteten Barrierefolie oder -schicht durch den Spalt, wodurch die Volumenschicht (5) mithilfe des Klebstoffs (19) an die Barrierefolie oder -schicht (6) gehaftet wird, **dadurch gekennzeichnet, dass** das Oberflächenmaterial der Andruckwalze (12) weicher als das Oberflächenmaterial der Stützwalze (11) ist.

2. Verfahren nach Anspruch 1, wobei die Volumenschicht (5) als eine kontinuierliche Bahn bereitgestellt wird.

3. Verfahren nach Anspruch 1 oder 2, wobei die Barrierefolie oder -schicht (6) als eine kontinuierliche Bahn bereitgestellt wird.

4. Verfahren nach einem der vorstehenden Ansprüche, wobei die Barrierefolie oder -schicht (6) eine Aluminiumfolie, eine mit einer Barrierebeschichtung versehene Kunststofffolie oder eine mit einer Barrierebeschichtung versehene Schicht auf Papier- oder Cellulosebasis ist.

5. Verfahren nach einem der vorstehenden Ansprüche, wobei die Volumenschicht (5) und die Barrierefolie oder -schicht (6) eine kombinierte Dicke zwischen 0,2 und 0,45 Millimeter aufweisen.

6. Verfahren nach einem der vorstehenden Ansprüche, ferner umfassend Einstellen des Abstands zwischen der Stützwalze (11) und der Andruckwalze (12) auf der Grundlage der kombinierten Dicke der Volumenschicht (5) und der Barrierefolie oder -schicht (6).

7. Verfahren nach Anspruch 6, das ferner Einstellen des Abstands zwischen der Stützwalze (11) und der Andruckwalze (12) umfasst, so dass der Abstand kleiner als die kombinierte Dicke der Volumenschicht (5) und der Barrierefolie oder -schicht (6) ist.

8. Verfahren nach Anspruch 6 oder 7, ferner umfassend Einstellen des Abstands auf der Grundlage einer von einem Benutzer mithilfe einer Benutzerschnittstelle (81) bereitgestellten Eingabe.

## Revendications

1. Procédé de stratification d'un film ou d'une feuille barrière (6) sur une couche en vrac (5) de papier ou de carton ou d'un autre matériau à base de cellulose, ladite couche en vrac (5) étant pourvue de trous traversants (3), le procédé comprenant :
le recouvrement du film ou de la feuille barrière (6) d'un adhésif humide (19),
l'introduction du film ou de la feuille barrière recouvert(e) à un pincement formé entre un rouleau pinceur (12) et un rouleau de support (11) de telle sorte que la face non recouverte du film ou de la feuille barrière (6) soit en contact avec le rouleau pinceur (12),
l'introduction de la couche en vrac (5) dans ledit pincement de telle sorte que la couche en vrac (5) soit en contact avec le rouleau de support (11), et
l'introduction de la couche en vrac (5) et du film ou de la feuille barrière recouvert(e) par le pincement, ce qui permet à la couche en vrac (5) d'adhérer au film ou à la feuille barrière (6) au moyen de l'adhésif (19), **caractérisé en ce que** le matériau de surface du rouleau pinceur (12) est plus mou que le matériau de surface du rouleau de support (11).

2. Procédé selon la revendication 1, la couche en vrac (5) étant fournie sous la forme d'une bande continue.

3. Procédé selon la revendication 1 ou 2, le film ou la feuille barrière (6) étant fourni(e) sous forme de bande continue.

4. Procédé selon l'une quelconque des revendications précédentes, le film ou la feuille barrière (6) étant une feuille d'aluminium, un film plastique pourvu d'un revêtement barrière, ou une feuille de papier ou à base de cellulose pourvue d'un revêtement barrière.

5. Procédé selon l'une quelconque des revendications précédentes, la couche en vrac (5) et le film ou la feuille barrière (6) ayant une épaisseur combinée comprise entre 0,2 et 0,45 millimètre.

6. Procédé selon l'une quelconque des revendications précédentes, comprenant en outre l'ajustement de la distance entre le rouleau de support (11) et le rouleau pinceur (12) sur la base de l'épaisseur combinée de la couche en vrac (5) et du film ou de la feuille barrière (6).

7. Procédé selon la revendication 6, comprenant en outre l'ajustement de la distance entre le rouleau de support (11) et le rouleau pinceur (12) de sorte que ladite distance soit inférieure à l'épaisseur combinée de la couche en vrac (5) et du film ou de la feuille barrière (6).

8. Procédé selon la revendication 6 ou 7, comprenant en outre l'ajustement de la distance sur la base d'une entrée fournie par un utilisateur au moyen d'une interface utilisateur (81).
